# EUROPEAN PATENT SPECIFICATION

(11) **EP 2 925 551 B1**
(45) Date of publication and mention of the grant of the patent: **11.08.2021**
(21) Application number: 12832739.2
(22) Date of filing: 03.12.2012
(51) Int. Cl.: B60K 37/06, G06F 3/0354

(54) **INFORMATION DEVICE FOR A VEHICLE DRIVER AND METHOD TO CONTROL SAME**
INFORMATIONSVORRICHTUNG FÜR EINEN FAHRZEUGFAHRER UND VERFAHREN ZUR STEUERUNG DAVON
DISPOSITIF D'INFORMATION POUR UN CONDUCTEUR DE VÉHICULE ET PROCÉDÉ POUR SA COMMANDE

(43) Date of publication of application: 07.10.2015
(73) Proprietor: MUNIC, 94800 Villejuif (FR)
(72) Inventor: SOLOMON, Aaron, F-94800 Villejuif (FR)
(74) Representative: Plasseraud IP
(86) International application number: PCT/IB2012/002897
(87) International publication number: WO 2014/087185

(56) References cited:
- EP-A1- 1 637 976
- DE-A1-102010 013 843
- US-A1- 2008 306 685
- None

## Description

### FIELD OF THE INVENTION

The present invention relates to information devices for vehicle drivers and to the methods for controlling such devices.

### BACKGROUND OF THE INVENTION

More particularly, the invention relates to a portable information device for a vehicle driver comprising at least one electronic controller (4) linked to a display touch screen (2), to communication means (7) and to geolocating means (6), and the electronic controller being adapted to simultaneously run an operating system and a plurality of applications, including at least one geolocated application.

Such type of device is known in the art, for example from disclosures WO2009/091639 (to Garmin) or WO2009/080066 (to Tomtom). As a matter of fact, in these devices, the physical switches have been eliminated on behalf of the touch screen and nearly all the user interface relies on touch actuations on the touch screen.

The document US 2008/306685 A1 does not disclose the characterising portion of claim 1.

However, in certain driving conditions, the need to point a particular object on the screen creates a detrimental burden to a driver. Also, several selecting steps may be required to select the desired function, which may involve too much time and attention in certain driving conditions.

Therefore, it arose a need to improve such type of information device to improve safe use of such of device under driving conditions.

### SUMMARY OF THE DISCLOSURE

The present invention is defined by the portable information device according to claim 1.

Whereby a direct access to certain functions or applications is easily provided to the driver thanks to the dispositions according to which the electronic controller is adapted to switch, upon an actuation of one of the individual control switch, from a current display arrangement displayed at the time of the switch actuation, to a display mode dedicated to the application corresponding to the actuated switch.

Thanks to these dispositions, the user can easily select a new application or switch to another application with a minimum amount of attention required, thereby improving the driving safety.

Whereby an easy return to the previous display is provided thanks to the disposition according to which the electronic controller is adapted to switch, upon a first actuation of one of the toggle access switch, from a first display mode, currently displayed at the time of the first toggle access switch actuation, to a second display mode, and to return to the first display mode upon a second subsequent actuation of the same toggle access switch.

In various embodiments of the invention, one may possibly have recourse in addition to one and/or other of the following arrangements:
- the number of toggle access switches may be at least 3, preferably at least 4, still preferably at least 5; thereby a large number of applications or functions can be accessed easily, with a simple return;
- the number of individual control switches (3) may be at least five; thereby a large number of applications or functions can be accessed easily;
- the device is an autonomous portable device; thereby a user can bring the device with him/her and place it in various locations;
- the device has small dimensions that fits in a 10cmX8cmX2cm volume, thereby a user can put it in his/her pocket;
- the control switches are physical switches located in the immediate vicinity of the touch screen; thereby a user can easily locate those switches, and does not need to move the hand to make a subsequent touch action;
- the second display mode uses substantially the full screen; thereby providing maximum size to the second display mode accessed through direct access feature;
- each of the switches of the plurality of the control switches comprises a pictogram representing the related application (or function); thereby the identification of switches is straightforward for users;

According to another aspect, there is provided a method to control a portable information device (1) according to the independent claim 9.

Whereby a direct access to certain functions or applications is easily provided to the driver thanks to the dispositions according which the electronic controller is adapted to switch, upon an actuation of one of the individual control switch, from a current display arrangement displayed at the time of the switch actuation, to a display mode dedicated to the application corresponding to the actuated switch.

Thanks to these dispositions, the user can easily cause the display to switch to the related required application with a minimum amount of attention required, thereby improving the driving safety.

In various embodiments of the invention, one may possibly have recourse in addition to one and/or other of the following arrangements.

The second display mode uses substantially the full screen; thereby providing maximum size to the second displayed mode accessed through direct access mode;
- the parameters of the first display mode 51 are restored when performing the returning step, with updated content to the time of the returning step; whereby the application relative to the first display mode continues to run in background;
- the return to first display mode is directed to a default mode if the application relative to the first
display mode has come to an idle state at the time of return; thereby providing a consistent behavior to users.

### BRIEF DESCRIPTION OF THE DRAWINGS

Other features and advantages of the invention appear from the following detailed description of one of its embodiments, given by way of non-limiting example, and with reference to the accompanying drawings.

In the drawings:
- Figure 1 is a schematic view of the device according to the invention,
- Figure 2 represents a circuit diagram of the device of Figure 1, and related system,
- Figure 3 shows a statechart of the device behaviour, illustrating a direct access functionality,
- Figure 4 shows another statechart of the device behaviour, illustrating a toggle access functionality,
- Figure 5 is a schematic view similar to figure 1, showing another embodiment of the device,
- Figure 6 shows a list of pictograms corresponding to applications hosted in the device,
- Figures 7A and 7B show time charts illustrating the direct access and toggle access functionalities.

### MORE DETAILLED DESCRIPTION OF THE DISCLOSURE

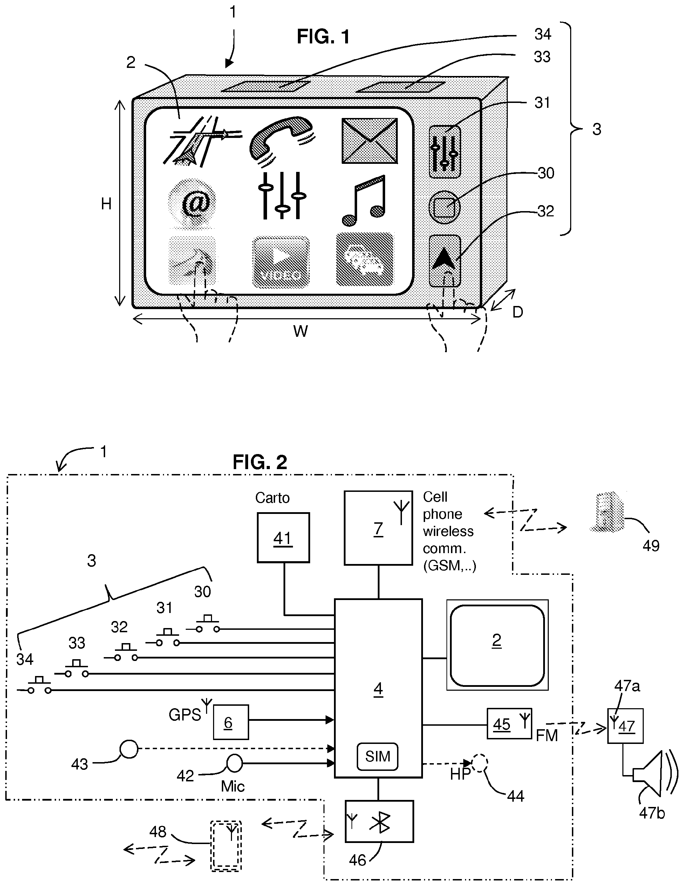

As illustrated on Figure 1, there is provided an information device **1** for a vehicle driver. This device can be called a PND (Personal Navigation Device), a DA (Driver Assistant), or a PDA (Personal Digital Assistant), intended to supply a variety of services to its owner.

The dimensions of such a device is relatively small, the width **W** being typically less than 12cm, the height **H** typically less than 8cm, the depth **D** typically less than 25mm; preferably the width **W** is less than 10cm, the height **H** is less than 6cm, the depth **D** is less than 15mm; therefore the device is well adapted to lodge in a variety of locations, and is well adapted to be brought by its user in a plurality of places, including in the pocket of a cloth. The weight of such device is preferably less than 150 grams, even more preferably less than 120 grams. The device is indeed a portable autonomous device, provided with an embedded rechargeable battery, which can be recharged through a wired connection, no other wired connection is needed for normal operation.

Such device can be used aboard a vehicle, for example an automobile, a motorcycle, a truck, but it can also be used when walking, riding or aboard public transportation like railways, metros, autobus. The driver or owner of the device can easily remove the device from the vehicle for security reasons and/or to prevent theft.

When typically used in an automobile, such device can be removably fixed via a socket to the windscreen or to the dashboard of the vehicle, within reach of the driver. The driver can see and touch the device, since most interactions between the user and the device involve visual and/or touch interactions, as it will be explained later.

In a manner known per se, the touch screen enables a user to perform various operations like select an item or object, drag and drop an item, slide an object, expand or shrink an object, etc...

In the present example nearly all operations can be performed via touch interactions. Other methods of interactions with the device can additionally be used, like speech recognition and actuations of one or several physical switches, as it will be explained later.

For example, it may be necessary to use a physical switch to power on the device, whereas all functions can be handled via touch operations, in particular if no driving is required from the user at the same time.

As illustrated in Figure 2, the information device **1** comprises at least one electronic controller **4** linked to a display touch screen **2;** said controller is adapted to control the graphic display on the display screen **2** and to receive the touch signals from the touch screen in a manner known per se.

The device also comprises wireless communication means **7,** like cellular phone network, GSM or the like, enabling connection to the internet, the device comprising preferably a SIM card or the like for identification purposes with regard to remote server(s) **49** providing various services. According to an advantageous aspect, the data sent and received from the device **1** over the wireless internet communication is minimized, so that the data size is limited and also the time needed to transfer said data is limited.

The device also comprises geolocating means **6** like GPS or the like, and a memory device **41** able to store, among other data, cartographic data for the navigation application.

The device also comprises individual control switches **30-34** which are formed as push buttons in the depicted example, close to the touch screen. These switches shall be identified nearly without sight from the driver, they may comprise each a surface pattern, specific shape and position with regard to the physical limit of the device and the limits/border of the screen.

The device also comprises a microphone **42** and optionally a miniature loudspeaker **44.**

Besides, the device may also comprise a Bluetooth® interface **46** to serve as a bidirectional interface with a associated mobile phone **48** and a FM transmitter **45** to serve as an interface with the vehicle onboard audio system **47** as it will be explained in detail later.

Besides, the device may also comprise an accelerometer **43** adapted to sense the accelerations and/or brakings of the vehicle, in view of an eco-driving application.

The portable information device **1** is basically a multi-application platform which comprises a multi-task system. More precisely, the electronic controller **4** is adapted to simultaneously run an operating system and a plurality of applications **5,** including at least one geolocated application like a navigation application **51.** Such a navigation application 51 is intended to provide guidance from a start point to a destination point with reference to a cartographic map and by means of maneuvering indications given to a user/driver.

Apart from the navigation application **51,** the device can host a variety of other applications like:
- a wireless/mobile phone application **52,** intended to allow the user to place and receive phone calls, possibly via the device itself or via a Bluetooth® associated mobile phone 48,
- a most frequent settings application **53,** intended to allow the user to adjust some most frequently used settings of the device like the screen brightness, the FM transmitter operating frequency, etc...,
- a dangerous/risk areas signaling application **54** intended to inform the user about the hazard or risk areas along the route, not excluding speed control areas, this application being preferably supported by a displayed map,
- a traffic information application **55** intended to inform the user about traffic congestion area, roadworks, and the like, this application being preferably supported by a displayed map, the traffic information data being also used by the navigation application to provide optimal guidance,
- a music player application **56,** intended to allow the user to play music, especially digital MP3 music from the memory of the device or from the memory of a Bluetooth® associated mobile phone 48,
- an instant messaging application **57,** intended to allow the user to send and receive instant messages like Facebook®, Twitter®, MSN®, or the like,
- an electronic mail application **58** intended to allow the user to send and receive electronic mails,
- an internet browser application **59,** intended to allow the user to access the internet network and perform searches,
- a weather forecast application **5A** intended to inform the user about the weather forecasts, possibly in relation with the current position of the device,
- a yellow pages/directory application **5B,** intended to allow the user to search about professional services, possibly in relation with the current position of the device,
- a fuel stations application **5C,** intended to allow the user to search about fuel stations and current fuel prices, possibly in relation with the current position and with the planned route,
- a parking lot application **5D,** intended to allow the user to search about available parking spots, in relation with the current position and with the planned route,
- a configuration application **5E** intended to allow the user to adjust all parameters of the device (not only most frequent settings),
- a video player **5F,** allowing to play videos or show pictures,
- an eco-driving application, intended to inform the user about how economical is his/her driving, and give hints to decrease fuel consumption,
etc... this list not being limitative, the number of applications **M** being typically more than 10, often more than 15.

The menu is also an application, and therefore the top menu is also regarded an application per itself, which can be called by a direct access feature.

Some applications are permanently hosted in the device, others can be loaded from the internet via the communication means **7** upon instructions of the user, for example from an application store.

Each of the application can be displayed using the full screen space, but can also be displayed together with another application, thereby sharing the screen into two portions. A general status bar can also be displayed at the same time. A status bar dedicated to a particular application can also be displayed at the same time.

Each of the hosted applications can be in a running state or can be unactivated (not launched). When several applications are running, they are running simultaneously and concurrently, whether or not reported on the display.

The purpose and functionalities of the individual control switches 30-34 will now be explained.

These individual control switches are known as 'direct access' switches in the present disclosure. In other words, it allows the driver to jump directly to some application display or top menu, without requiring touch(es) on the touch screen (often several touch steps are required to obtain the same result as the direct access). Hence, direct access and toggle access are alternative to touch actions available in a hierarchical menu.

One of the 'direct access' switch is a top menu switch **30** which can be pressed to trigger (jump to) the display of the main menu of applications, as illustrated in Figure 1, which is also an application itself. There may be provided a pictogram like a rounded square or no pictogram at all. As will be explained later, this switch also supports a toggle switching function (also called toggle access).

Another 'direct access' switch **31** is a switch dedicated to the navigation application 51. The actuation of this switch triggers the display of the navigation as the main displayed function on the screen. As will be explained later, this switch also supports a toggle switching function.

Another 'direct access' switch **33** is a switch dedicated to the most frequent settings application. The actuation of this switch triggers the display of the most frequent settings as the main displayed function on the screen. As will be explained later, this switch also supports a toggle switching function.

There may be another 'direct access' switch **32** dedicated to the mobile phone application. The actuation of this switch triggers the display of the most frequent settings as the main displayed function on the screen. As will be explained later, this switch may also support a toggle switching function.

There may be provided other 'direct access' switch **34,35,** for example each dedicated to applications like the dangerous areas signaling application or to a traffic information application.

Therefore, it is provided a plurality of **N,** at least three direct access switches, preferably four direct access switches (N=4), five direct access switches 30-34 (N=5) in the illustrated example.

Among them, there are a plurality of **N'** toggle direct access switches 30-33 (in short a 'toggle switch' or 'toggle access'), at least two toggle access switches (N'=2), preferably three (N'=3) or four (N'=4) toggle access switches as illustrated. Toggle access function can be seen as an improvement or extension to the direct access function.

**N'** is preferably equal to **N** as illustrated, but it could also be otherwise (N'<N).

The choice of the applications or functions accessible with such direct access switches is determined by the frequency of use of these functions or applications under effective driving conditions, i.e. when the vehicle is moving, controlled by the driver.

For example, assuming that the navigation **51** is currently displayed as the main displayed function on the screen, if the user wants to adjust the brightness of the screen, a simple press on the switch **33** pops up the most frequent settings display instead of the navigation display. It is thus not necessary to go back to the main menu and select the most frequent settings item. Therefore the burden to select the most frequent settings is decreased.

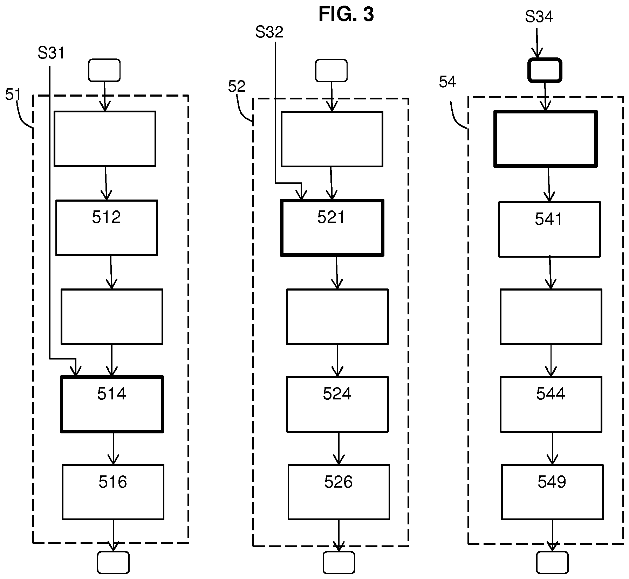

This is shown in figure 3, which illustrates mainly the 'direct access' function with three applications threads, one for each shown application. An actuation of switch **31** triggers the display of the navigation application (transition referenced S31), which was already running for example in a state 514, whatever may have been the displayed function before (except if the navigation was already the displayed application, where the 'toggle' logic may apply, see below).

An actuation of switch **32** triggers the display of the phone application (transition referenced S32), which was already running for example in a state 521, whatever may have been the displayed function before, else than the phone application.

Therefore, if the user wants to place or answer a phone call, a simple press on the switch 32 pops up the phone display instead of the navigation display.

An actuation of switch **33** (not shown in figure 3) triggers the display of the most frequent settings application, whatever may have been the displayed function before, else than the most frequent settings application.

An actuation of switch **34** triggers the launch and the display of the risk areas signaling application (transition referenced S34), which was not already running, whatever may have been the displayed function before.

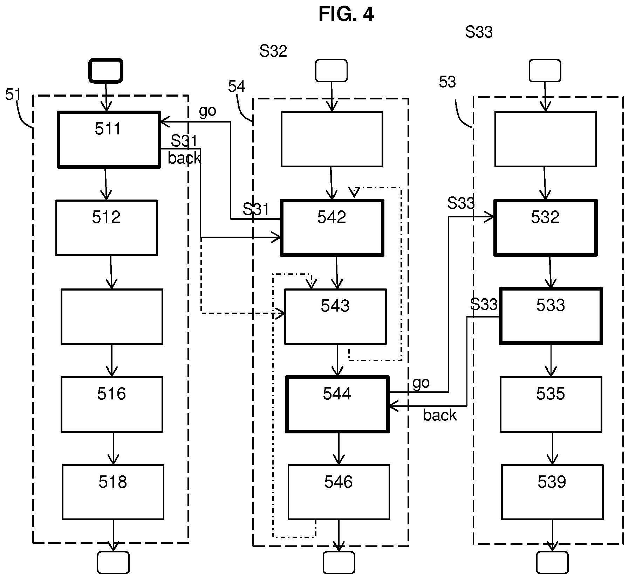

Regarding now the 'toggle access' function, referring to Figure 4 which shows three independent application threads, in the depicted example, the user has launched or selected the risk area signaling application 54 to be displayed while driving; at a certain point of time the user needs to change a device setting, like for example adjusting the brightness of the display. To perform such action, the user needs only to press switch 33; as a result the display is switched to the most frequent device settings (transition 'go' S33, from state 544 to state 532); then the user can touch the brightness bargraph cursor and adjust the brightness by sliding the cursor; accordingly, the brightness is updated (step 533). To return to the previous display, the user needs only to press again switch 33; as a result the display is switched back to the risk area signaling application (transition 'back' S33 from state 533 to state 544) as the display was before the 'go' actuation of switch 33, updated to the present time in terms of content.

According to another example, the user has also launched or selected the risk area signaling application 54 to be displayed while driving; at a certain point of time the user may need to check the next maneuver to be performed along the planned route or the updated current position. To perform such action, the user needs only to press switch **31;** as a result the display is switched to the navigation application (transition 'go' S31, from state **542** to state 511); then the user can check the map and next maneuver displayed on the navigation display. To return to the previous display, the user needs only to press again switch **31;** as a result the display is switched back to the risk area signaling application (transition 'back' S31 from state 511 to state 543) in a subsequent step with regard to the display as it was before the 'go' actuation of switch 31.

It will be appreciated that all running applications continue to run even if not displayed, for example a new risk area has been reported in step 543 while the display was focused on next maneuver.

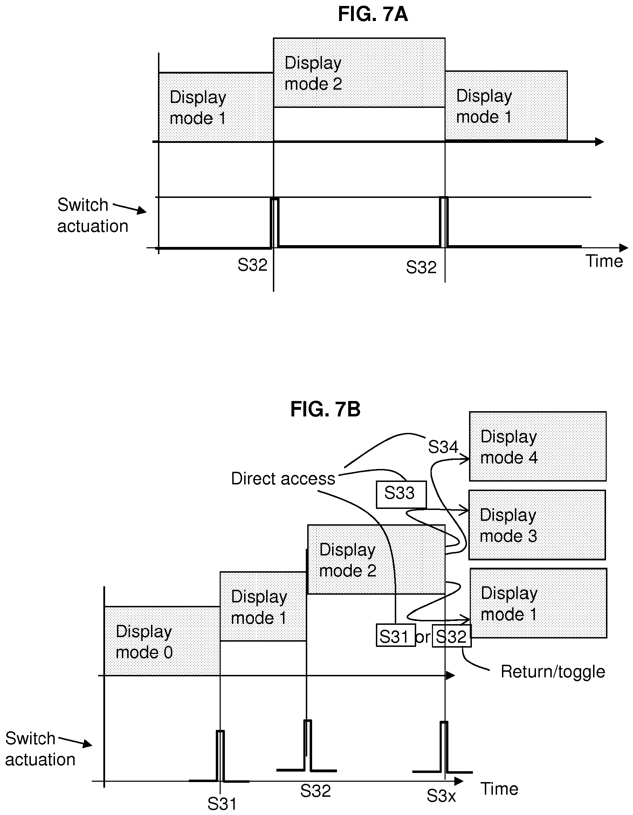

In other words, the electronic controller is adapted to perform firstly a 'go' step, consisting in switching, upon a first actuation of one of the toggle access switch, from a first display mode (relative to a first application), currently displayed at the time of the first toggle access switch actuation, to a second display mode (relative to a second application), and to perform secondly a 'back' step to return to the first display mode upon a second subsequent actuation of the same toggle access switch (cf. Fig. 7A).

Advantageously, the second display mode occupies nearly the full screen to maximize the readability of information displayed and enhance user comfort of use.

Advantageously, the return step 'back step' (step B-) is cancelled if another direct access switch is pressed after the 'go' step, i.e. the display is directed to the corresponding required display. A new 'back' step is can take place if this other direct access switch is pressed again (cf. Fig. 7B, second S32 transition).

The toggle function can also be referred to as 'Go & back' or 'to & fro'.

Regarding the audio function (used at least for phone and music player applications), the input relies either on the internal device microphone **42** or on the microphone of the associated mobile phone **48** via the Bluetooth® link **46** (like a known handfree set). Regarding the audio output, it relies preferably on the vehicle onboard loudspeakers **47b,** via the FM transmitter link **45.** More precisely, the audio output is transferred from the mobile phone to the information device **1** and then transferred to the vehicle onboard audio system **47** via the FM transmitter **45** and the FM receiver **47a** of the vehicle onboard audio system **47.** It is to be noted that the vehicle onboard audio system and the information device have to be tuned on the same FM frequency; and therefore, if the FM previously selected channel is not available, the user can select another frequency thanks to the most frequent setting application **53.**

The device Power-Off function is available from a touch actuation, whereas the power-On may be dependent on a power switch **39.** It is to be noted that a long press on any of the 'direct access' switches can alternatively be used to power up the device.

According to an aspect of the invention, most of the applications are substantially independent applications.

According to an aspect of the invention, the device deprived of rotary switch or joystick, which requires too much attention; it is preferred to use simple push buttons which require low attention.

It is to be noted that one particular display mode may be a combination of Navigation **51,** Traffic information **55** and risk area signalling **54** applications, which is referred to as 'base dashboard'. This display mode may be the default mode after power-on. It may be accessible by one of the above mentioned toggle switches or accessible by a double press on the menu button 30. In this case, the menu switch is toggle switch for Top Menu display and base dashboard display.

Of course the touch screen can be used as a virtual key board to enter text data for example.

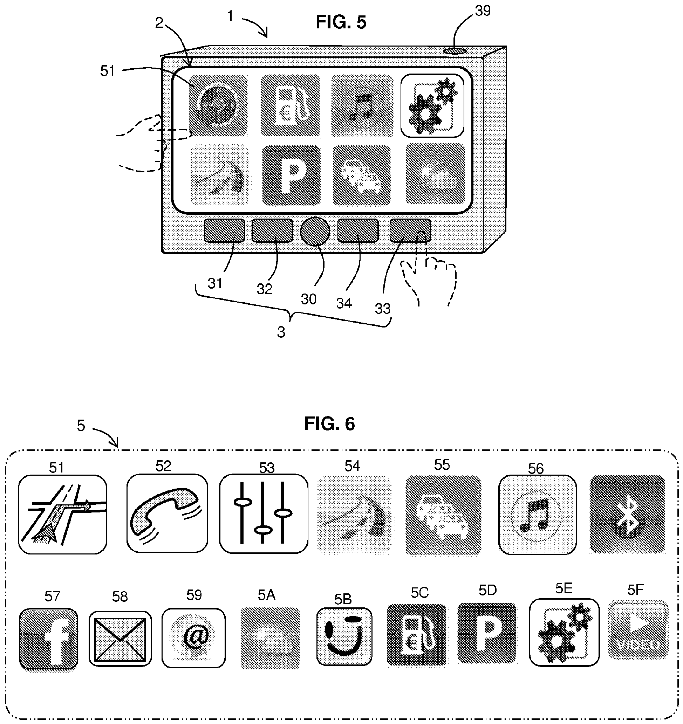

The control switches **30-34** may comprise as illustrated here pictograms that represent the application/function they relate to (cf. Figures 1 and 6).

It should be understood that the number **M** of applications **5** may be bigger than the number **N** of control switches **3,** even much bigger.

It is not excluded to affect the function of one (or several) direct access switch by a configuration operation, provided that the pictogram is absent or denotes a user configured preference.

Note that the effective action on the switches **30-34** can be taken in consideration either on press electric edge or on release electric edge, or a combination of both, as known per se.

The term 'display mode' or 'display arrangement' in the present specification may relate to:
- a display relating mainly to only one application (except status bar(s)), or to
- a display relating to two applications sharing the available display area in either two separate portions (screen sharing) or under a combined display (information from a second application inserted in the information of a first application); There may even be three applications combined like in the abovementioned 'base dashboard' display.

The above 'display mode' or 'display arrangement' definition applies in particular to the 'current' display from which the device departs from when a direct access switch is activated, and to which the device returns to when a 'back' switch of the toggle type is performed.

The number of individual control switches may be greater than 5, although not shown in the Figures.

## Claims

1. Portable information device (1) for a vehicle driver comprising at least one electronic controller (4) linked to a **display touch screen** (2), to communication means (7) and to geolocating means (6), and the electronic controller being adapted to simultaneously run an **operating system** and a plurality of **applications** (5), including at least one geolocated application,
wherein the information device (1) comprises a plurality (3) of at **least three individual control switches, formed as pushbuttons,** each one of these switches (30-34) corresponding respectively to one of the plurality of applications, and,
wherein the electronic controller is adapted to switch, upon an actuation of one of the individual control switch, from a current display arrangement displayed at the time of the switch actuation, to a display mode dedicated to the application corresponding to the actuated switch, the portable information device is **characterised in that** the plurality of at least three individual control switches (3) comprises at least two **toggle access switches** (30-33), in which the electronic controller is adapted to switch, upon a first actuation of a first one of the toggle access switches, from a first display mode, currently displayed at the time of the first toggle access switch actuation, to a second display mode while the application corresponding to the first display mode continues to run, and to return to the first display mode upon a second subsequent actuation of the same first toggle access switch, and **in that** said return step is cancelled if a second one of the toggle access switches is pressed after the first actuation of the first one of the toggle access switches.

2. Portable information device according to claim 1, wherein the number of toggle access switches is at least 3, preferably at least 4, still preferably at least 5.

3. Portable information device according to claim 1, wherein the number of individual control switches (3) is at least five.

4. Portable information device according to any of claims 1 to 3, wherein the device is an autonomous portable device.

5. Portable information device according to any of claims 1 to 4, wherein the device has small dimensions that fits in a 10cmX8cmX2cm volume.

6. Portable information device according to any of claims 1 to 3, wherein said control switches are physical switches located in the immediate vicinity of the touch screen.

7. Portable information device according to any of claims 1 to 6, wherein the second display mode uses substantially the full screen.

8. Portable information device according to any of claims 1 to 7, wherein each of the switches of the plurality of the control switches comprises a pictogram representing the related application.

9. Method to control a portable information device (1) for a vehicle driver, said information device comprising at least one electronic controller (4) linked to a display touch screen (2), to communication means (7) and to geolocating means (6), and the electronic controller being adapted to simultaneously run an operating system and a plurality of applications, including at least one geolocated application,
wherein the information device (1) comprises comprises a plurality (3) of at least three individual control switches, **formed as pushbuttons,** each one of these switches (30-34) corresponding respectively to one of the plurality of applications, said control switches being physical switches located in the immediate vicinity of the touch screen, the method comprising the steps :
- switching, upon an actuation of one of the individual control switch, from a current display arrangement displayed at the time of the switch actuation, respectively to a display mode dedicated to the application corresponding to the actuated switch or to the top menu function,
wherein the plurality of at least three individual control switches (3) comprises at least two toggle access switches (30-33),
the method comprising the steps :
A- switching, upon a first actuation of a first one of the toggle access switches, from a first display mode, currently displayed at the time of the first toggle access switch actuation, to a second display mode, the application corresponding to the first display mode continuing to run,
B- returning to the first display mode upon a second subsequent actuation of the same first toggle access switch,
whereby an easy return to the previous display is provided,
wherein said return step is cancelled if a second one of the toggle access switches is pressed after the first actuation of the first one of the toggle access switches.

10. Method according to claim 9, wherein the second display mode uses substantially the full screen.

11. Method according to claim 9, wherein parameters of the first display mode are restored when performing the returning step, with updated content to the time of the returning step.

12. Method according to claim 9, wherein the return to first display mode is directed to a default mode if the application(s) relative to the first display has come to an idle state at the time of return.

## Patentansprüche

1. Tragbare Informationsvorrichtung (1) für einen Fahrzeugfahrer, die wenigstens eine elektronische Steuerung (4), die mit einem Berührungsanzeigebildschirm (2), mit einer Kommunikationseinrichtung (7) und mit einer Geolokalisierungseinrichtung (6) gekoppelt ist, und wobei die elektronische Steuerung geeignet ist, um gleichzeitig ein Betriebssystem und mehrere Anwendungen (5) einschließlich wenigstens einer geolokalisierten Anwendung zu betreiben,
wobei die Informationsvorrichtung (1) eine Mehrzahl (3) von wenigstens drei einzelnen Steuerschaltern, die als Tasten ausgebildet sind, aufweist, wobei jeder dieser Schalter (30 - 34) jeweils einer der mehreren Anwendungen entspricht, und
wobei die elektronische Steuerung geeignet ist, um bei einer Betätigung eines der einzelnen Steuerschalter von einer aktuellen Anzeigeanordnung, die zur Zeit der Schalterbetätigung angezeigt wird, auf eine Anzeigebetriebsart umzuschalten, die der Anwendung, die dem betätigten Schalter entspricht, zugeordnet ist, wobei die tragbare Informationsvorrichtung **dadurch gekennzeichnet ist, dass**
die Mehrzahl von wenigstens drei einzelnen Steuerschaltern (3) wenigstens zwei Kippzugriffschalter (30 - 33) aufweist, bei denen die elektronische Steuerung geeignet ist, um bei einer ersten Betätigung eines ersten der Kippzugriffschalter von einer ersten Anzeigebetriebsart, die aktuell zur Zeit der Betätigung des ersten Kippzugriffschalters angezeigt wird, auf eine zweite Anzeigebetriebsart umzuschalten, während die Anwendung, die der ersten Anzeigebetriebsart entspricht, weiterhin läuft, und bei einer zweiten anschließenden Betätigung des gleichen ersten Kippzugriffschalters zu der ersten Anzeigebetriebsart zurückzukehren, und dass
der Rückkehrschritt abgebrochen wird, wenn nach der ersten Betätigung des ersten der Kippzugriffschalter ein zweiter der Kippzugriffschalter gedrückt wird.

2. Tragbare Informationsvorrichtung nach Anspruch 1, wobei die Anzahl von Kippzugriffschaltern wenigstens 3, vorzugsweise wenigstens 4, noch besser wenigstens 5, beträgt.

3. Tragbare Informationsvorrichtung nach Anspruch 1, wobei die Anzahl einzelner Steuerschalter (3) wenigstens 5 beträgt.

4. Tragbare Informationsvorrichtung nach einem der Ansprüche 1 bis 3, wobei die Vorrichtung eine autonome tragbare Vorrichtung ist.

5. Tragbare Informationsvorrichtung nach einem der Ansprüche 1 bis 4, wobei die Vorrichtung kleine Abmessungen hat, die in ein Volumen von 10 cm x 8 cm x 2 cm passen.

6. Tragbare Informationsvorrichtung nach einem der Ansprüche 1 bis 3, wobei die Steuerschalter physische Schalter sind, die in der unmittelbaren Nachbarschaft des Berührungsbildschirms angeordnet sind.

7. Tragbare Informationsvorrichtung nach einem der Ansprüche 1 bis 6, wobei die zweite Anzeigebetriebsart im Wesentlichen den gesamten Bildschirm nutzt.

8. Tragbare Informationsvorrichtung nach einem der Ansprüche 1 bis 7, wobei jeder der Schalter der Mehrzahl der Steuerschalter ein Piktogramm aufweist, das die zugehörige Anwendung darstellt.

9. Verfahren zur Steuerung einer tragbaren Informationsvorrichtung (1) für einen Fahrzeugfahrer, wobei die Informationsvorrichtung wenigstens eine elektronische Steuerung (4) aufweist, die mit einem Berührungsanzeigebildschirm (2), mit einer Kommunikationseinrichtung (7) und mit einer Geolokalisierungseinrichtung (6) gekoppelt ist, und wobei die elektronische Steuerung geeignet ist, um gleichzeitig ein Betriebssystem und mehrere Anwendungen einschließlich wenigstens einer geolokalisierten Anwendung zu betreiben,
wobei die Informationsvorrichtung (1) eine Mehrzahl (3) von wenigstens drei einzelnen Steuerschaltern, die als Tasten ausgebildet sind, aufweist, wobei jeder dieser Schalter (30 - 34) jeweils einer der mehreren Anwendungen entspricht, wobei diese Steuerschalter physische Schalter sind, die in der unmittelbaren Nähe des Berührungsbildschirms angeordnet sind, wobei das Verfahren die folgenden Schritte aufweist:
bei einer Betätigung eines der einzelnen Steuerschalter Umschalten von einer aktuellen Anzeigeanordnung, die zur Zeit der Schalterbetätigung angezeigt wird, jeweils auf eine Anzeigebetriebsart, die der Anwendung, die dem betätigten Schalter entspricht, zugeordnet ist, oder auf die Hauptmenüfunktion,
wobei die Mehrzahl von wenigstens drei einzelnen Steuerschaltern (3) wenigstens zwei Kippzugriffschalter (30 - 33) aufweist,
wobei das Verfahren die folgenden Schritte aufweist:
A) bei einer ersten Betätigung eines ersten der Kippzugriffschalter Umschalten von einer ersten Anzeigebetriebsart, die aktuell zur Zeit der Betätigung des ersten Kippzugriffschalters angezeigt wird, auf eine zweite Anzeigebetriebsart, während die Anwendung, die der ersten Anzeigebetriebsart entspricht, weiterhin läuft, und
B) bei einer zweiten anschließenden Betätigung des gleichen ersten Kippzugriffschalters Zurückkehren zu der ersten Anzeigebetriebsart,
wobei eine einfache Rückkehr zu der vorhergehenden Anzeige bereitgestellt wird,
wobei dieser Rückkehrschritt abgebrochen wird, wenn nach der ersten Betätigung des ersten der Kippzugriffschalter ein zweiter der Kippzugriffschalter gedrückt wird.

10. Verfahren nach Anspruch 9, wobei die zweite Anzeigebetriebsart im Wesentlichen den gesamten Bildschirm nutzt.

11. Verfahren nach Anspruch 9, wobei Parameter der ersten Anzeigebetriebsart mit dem zur Zeit des Rückkehrschritts aktualisierten Inhalt wiederhergestellt werden, wenn der Rückkehrschritt durchgeführt wird.

12. Verfahren nach Anspruch 9, wobei die Rückkehr zu der ersten Anzeigebetriebsart auf eine Vorgabebetriebsart geleitet wird, wenn die Anwendung(en) bezüglich der ersten Anzeige zur Zeit der Rückkehr in einen Ruhezustand gekommen ist.

## Revendications

1. Dispositif d'information portable (1) pour un conducteur de véhicule comprenant au moins un organe de commande électronique (4) relié à un écran tactile d'affichage (2), à des moyens de communication (7) et à des moyens de géolocalisation (6), et l'organe de commande électronique étant apte à exécuter simultanément un système d'exploitation et une pluralité d'applications (5), incluant au moins une application géolocalisée,
dans lequel le dispositif d'information (1) comprend une pluralité (3) d'au moins trois commutateurs de commande individuels, sous forme de boutons-poussoirs, chacun de ces commutateurs (30-34) correspondant respectivement à l'une parmi la pluralité d'applications, et
dans lequel l'organe de commande électronique est adapté pour commuter, lors d'un actionnement de l'un parmi les commutateurs de commande individuels, d'un agencement d'affichage présentement affiché au moment de l'actionnement du commutateur, à un mode d'affichage dédié à l'application correspondant au commutateur actionné,
le dispositif d'information portable étant **caractérisé en ce que** la pluralité d'au moins trois commutateurs de commande individuels (3) comprend au moins deux commutateurs d'accès à bascule (30-33), dans lequel l'organe de commande électronique est adapté pour commuter, lors d'un premier actionnement d'un premier parmi les commutateurs d'accès à bascule, d'un premier mode d'affichage, présentement affiché au moment du premier actionnement de commutateur d'accès à bascule, à un second mode d'affichage pendant que l'application correspondant au premier mode d'affichage continue de s'exécuter, et à retourner au premier mode d'affichage lors d'un second actionnement ultérieur du même premier commutateur d'accès à bascule,
et **en ce que** ladite étape de retour est annulée si un second parmi les commutateurs d'accès à bascule est pressé après le premier actionnement du premier parmi les commutateurs d'accès à bascule.

2. Dispositif d'information portable selon la revendication 1, dans lequel le nombre de commutateurs d'accès à bascule est au moins 3, de préférence au moins 4, de préférence encore au moins 5.

3. Dispositif d'information portable selon la revendication 1, dans lequel le nombre de commutateurs de commande individuels (3) est au moins cinq.

4. Dispositif d'information portable selon l'une quelconque des revendications 1 à 3, dans lequel le dispositif est un dispositif portable autonome.

5. Dispositif d'information portable selon l'une quelconque des revendications 1 à 4, dans lequel le dispositif a des petites dimensions s'ajustant dans un volume de 10 cm x 8 cm x 2 cm.

6. Dispositif d'information portable selon l'une quelconque des revendications 1 à 3, dans lequel lesdits commutateurs de commande sont des commutateurs physiques situés à proximité immédiate de l'écran tactile.

7. Dispositif d'information portable selon l'une quelconque des revendications 1 à 6, dans lequel le second mode d'affichage utilise sensiblement le plein écran.

8. Dispositif d'information portable selon l'une quelconque des revendications 1 à 7, dans lequel chacun des commutateurs de la pluralité de commutateurs de commande comprend un pictogramme représentant l'application concernée.

9. Procédé de commande d'un dispositif d'information portable (1) pour un conducteur de véhicule, ledit dispositif d'information comprenant au moins un organe de commande électronique (4) relié à un écran tactile d'affichage (2), à des moyens de communication (7) et à des moyens de géolocalisation (6), et l'organe de commande électronique étant adapté pour exécuter simultanément un système d'exploitation et une pluralité d'applications, incluant au moins une application géolocalisée,
dans lequel le dispositif d'information (1) comprend une pluralité (3) d'au moins trois commutateurs de commande individuels, sous forme de boutons-poussoirs, chacun de ces commutateurs (30-34) correspondant respectivement à l'une parmi la pluralité d'applications, lesdits commutateurs de commande étant des commutateurs physiques situés à proximité immédiate de l'écran tactile,
le procédé comprenant les étapes de :
- la commutation, lors d'un actionnement de l'un parmi les commutateurs de commande individuels, d'un agencement d'affichage présentement affiché au moment de l'actionnement de commutateur, respectivement à un mode d'affichage dédié à l'application correspondant au commutateur actionné ou à la fonction de menu principal,
dans lequel la pluralité d'au moins trois commutateurs de commande individuels (3) comprend au moins deux commutateurs d'accès à bascule (30-33),
le procédé comprenant les étapes de :
A- la commutation, lors d'un premier actionnement d'un premier parmi les commutateurs d'accès à bascule, d'un premier mode d'affichage, présentement affiché au moment du premier actionnement de commutateur d'accès à bascule, à un second mode d'affichage, l'application correspondant au premier mode d'affichage continuant de s'exécuter,
B- le retour au premier mode d'affichage lors d'un second actionnement ultérieur du même premier commutateur d'accès à bascule,
de telle manière qu'un retour facile à l'affichage précédent soit fourni,
dans lequel ladite étape de retour est annulée si un second parmi les commutateurs d'accès à bascule est pressé après le premier actionnement du premier parmi les commutateurs d'accès à bascule.

10. Procédé selon la revendication 9, dans lequel le second mode d'affichage utilise sensiblement le plein écran.

11. Procédé selon la revendication 9, dans lequel des paramètres du premier mode d'affichage sont restaurés lors de la réalisation de l'étape de retour, avec un contenu mis à jour au moment de l'étape de retour.

12. Procédé selon la revendication 9, dans lequel le retour au premier mode d'affichage est dirigé vers un mode par défaut si la ou les applications relatives au premier mode d'affichage sont dans un état de veille au moment de retour.
